# EUROPEAN PATENT APPLICATION

(11) **EP 2 393 266 A1**
(43) Date of publication of application: **07.12.2011**
(21) Application number: 11004488.0
(22) Date of filing: 01.06.2011
(51) Int. Cl.: H04M 1/725, H04W 12/08, H04W 12/04, G08C 17/02

(54) **Method and system for providing a user equipment with acces control to a remotely controllable device**

(30) Priority: 02.06.2010 EP 10005739; 02.06.2010 US 350811 P
(71) Applicant: Deutsche Telekom AG, 53113 Bonn (DE)
(72) Inventor: Wirths, Wolfgang, 53175 Bonn (DE); Fröller, Patrick, 2700 Wiener Neustadt (AT)
(74) Representative: Schwöbel, Thilo K.

(57) **Abstract**

The invention relates to a method and a system for providing a user equipment with access control to a remotely controllable device comprising the steps of sending an access request for the remotely controllable device to a network operator of a mobile radio access network by the user equipment, verifying the authenticity of the user equipment by using a mobile authentification method and transmitting an access key for the remotely controllable device to the user equipment if the user equipment is authorized, wherein the user equipment gets access control to the remotely controllable device due to the access key.

## Description

### BACKGROUND

The present invention relates to a method and system for providing a user equipment with access control to a remotely controllable device.

It is common knowledge that remotely controllable devices are remotely operable not only by the remote control of the manufacturer of the remotely controllable device, but also by portable user equipments like mobile phones, for instance, if the user equipment is provided with current near field communication technologies, like Bluetooth (e.g. Bluetooth 802.11) or Infrared (e.g. IrDA).

For example, the European patent application EP 1 154 623 A2 discloses a portable communications device with means of sending and/or receiving infrared which has an antenna, a display device and an input device. It is designed in such a way that two or more appliances that each have the means of receiving infrared and operate by using different code tables can be operated remotely via infrared by the portable communications device.

Disadvantageously, suchlike near field communications only allow direct communication between two devices, the user equipment and the remotely controllable device, without any possibility for a third party to manage access and usage of the controllable device. Furthermore, an authentification proceeding for increasing the security level and to avoid unauthorized access to the controllable device is not known from the prior art. Therefore, it is also inappropriate to use these prior-art methods for providing a user equipment with access control to a remotely controllable electronic door lock.

### SUMMARY

It is an object of the present invention to provide a user equipment with access control to a remotely controllable device wherein the access and usage of the remotely controllable device can be managed and controlled by a third party and wherein a high security level can be achieved.

The object of the present invention is achieved by a method for providing a user equipment with access control to a remotely controllable device comprising the steps of sending an access request for the remotely controllable device to a network operator of a mobile radio access network by the user equipment, verifying the authenticity of the user equipment by using a mobile authentification method and transmitting an access key for the remotely controllable device to the user equipment by the network operator if the user equipment is authorized, wherein the user equipment gets access control to the remotely controllable device due to the access key, and wherein the validity of the access key is time limited and/or wherein the access key is a one time key and/or wherein the access key provides access control for a plurality of remotely controllable devices.

According to the present invention, it is thereby advantageously possible that before providing the user equipment with the access key which facilitates the user equipment to get access control to the remotely controllable the authenticity of the user equipment is verified. In this connection, the usage of a mobile authentification method ensures a high security standard. The mobile authentification method comprises security checks towards the SIM card issued by the network operator, for instance (e.g. by using ciphering algorithms). Furthermore, the access and the usage of the remotely controllable device by the user equipment can be managed and controlled by a third party because the identity of the user equipment is determined by the network operator on the one hand and the user equipment needs the access key to get access control to the remotely controllable device on the other hand. The third party preferably is the network operator of the mobile radio access network and/or a service provider providing the network operator with the required access data and/or a device administrator commissioning the service provider in a suchlike manner and providing the service provider with the required access data, in particular the identity of the remotely controllable device and/or the identity of the user equipment.

According to a preferred embodiment of the present invention, the validity of the access key is time limited, so that the access control of the user equipment to the remotely controllable device is limited in time. Especially, it is preferred that the access control of the user equipment to the remotely controllable device is limited in time, e.g. for 5 minutes, for 10 minutes or for 30 minutes or for 60 minutes.

According to another preferred embodiment of the present invention, the access key is a one time key or the access key is usable several times. It is herewith advantageously possible to determine a maximum number of permissible uses.

In another preferred embodiment of the present invention, the access key provides access control for multiple remotely controllable devices. In particular, a plurality of remotely controllable devices are grouped together in a logical cluster, e.g. according to the location and/or the application of the remotely controllable devices, and the user equipment receives only one access key allowing access control to all remotely controllable devices of the corresponding cluster.

According to the present invention, it is preferred that the location of the user equipment is determined prior to transmitting the access key for the remotely controllable device to the user equipment. Thereby, it is possible according to the present invention to prevent fraud by verifying that the determined current location of the user equipment is within predefined geographical area, e.g. a home zone of the user equipment.

Preferably, the access key comprises a usage profile for the remotely controllable device, wherein the usage profile limits the access control of the user equipment to certain services of the remotely controllable device and/or wherein the usage profile comprises technical data for using the interface between the remotely controllable device and the user equipment. A usage profile e.g. comprises communication rules for the remote interaction between the user equipment and the remotely controllable device including information about carrier frequencies, encryption mechanism, functional principles, signal lookup tables and/or the like.

Furthermore, the usage profile preferably determines the range of functions which may be operated by the user equipment due to the access key. If the remotely controllable device comprises a TV, the usage profile allows the user equipment to switch the TV on/off and to change the volume and the TV channels, but the access control of the user equipment is limited in such a manner that reprogramming the frequencies of the TV channels or adjusting the colour/contrast of the TV by using the user equipment is not released, for instance.

In a preferred embodiment of the present invention, the user equipment detects remotely controllable devices in range. Advantageously, the user equipment is capable of automatically transmitting an access request for the detected remotely controllable device to the network operator if a certain remotely controllable device is detected. Preferably, the user equipment also identifies the remotely controllable device and transmits an access request to the network operator comprising an identifier of the remotely controllable device. In a preferred embodiment, the network operator verifies the authenticity of the identifier and provides a certain access key assigned to the identifier, wherein the access key is transmitted to the user equipment if the user equipment, as well as the remotely controllable device are authorized. It is herewith advantageously possible that the network operator selects a certain access key assigned to the certain remotely controllable device on basis of the received identifier. Furthermore, it is advantageous that both the authenticity of the user equipment, as well as the authenticity of the remotely controllable device is verified by the network operator in order to prevent misuse.

According to a preferred embodiment of the present invention, the method comprises an initial step of initially registering the remotely controllable device for access control by a user equipment, wherein the initial step comprises a step of transmitting the identifier to a service provider. In this way, a certain remotely controllable device is registered for remote access control proceedings, for the first time. Preferably, a further initial step of initially enabling the user equipment for access control to the remotely controllable device is performed by transmitting a further identifier of the user equipment to the service provider. In this way, a certain user equipment is registered for remote access control proceedings, for the first time. These initial steps are accomplished e.g. by an administrator configuring, managing and/or monitoring remote controllable devices and/or user equipments. The administrator preferably configures the access rights, as well as the usage profiles. Furthermore, the administrator preferably groups several remotely controllable devices to a certain cluster, as mentioned above.

According to another preferred embodiment of the present invention, the initial step comprises a step of transmitting the identifier and the corresponding access key from the service provider to the network operator and/or wherein the further initial step comprises a step of transmitting the further identifier from the service provider to the network operator. Advantageously, there is a data communication between the network operator and the service provider, so that the network operator is on the one hand capable of performing the authenticity checks on basis on information provided by the service provider, like the identifier and/or the further identifier, and on the other hand capable of providing the user equipment with the requested information, like the access key, the usage profile and/or clustering data also provided by the service provider.

Another object of the present invention is a system for providing a user equipment with access control to a remotely controllable device comprising the user equipment, the remotely controllable device and a network operator of a mobile radio access network, wherein the network operator is configured to receive an access request for the remotely controllable device from the user equipment and to verify the authenticity of the user equipment by using a mobile authentification method and to transmit an access key for the remotely controllable device towards the user equipment if the user equipment is authorized, wherein the user equipment and the remotely controllable device are configured in such a manner that the user equipment gets access control to the remotely controllable device due to the access key, and wherein the validity of the access key is time limited and/or wherein the access key is a one time key and/or wherein the access key provides access control for a plurality of remotely controllable devices.

According to the present invention, it is thereby advantageously possible that the user equipment gets access control to the remotely controllable device not until the authenticity of the user equipment is verified. Compared to the state of the art, it is herewith possible to prevent misuse and to highly increase the security level, so that the system is applicable also for security-related applications, for instance. Preferably, the system is configured to perform a method according to the present invention.

In a preferred embodiment of the present invention, the user equipment is configured to identify the remotely controllable device in range and to transmit an access request to the network operator comprising an identifier of the remotely controllable device, wherein the network operator is configured to transmit a certain access key assigned to the identifier towards the user equipment if the user equipment, as well as the remotely controllable device are authorized. Preferably, the system comprises a service provider providing the network operator with an identifier of the remotely controllable device and/or with a further identifier of the user equipment, wherein the service provider comprises a user and/or data interface for registering the controllable device and/or the user equipment to the system.

In particular, the user equipment comprises a mobile phone and/or a PDA (Personal Digital Assistant) and/or a laptop respectively with access to the mobile radio network. Preferably, the user equipment has access control to the remotely controllable device due to the access key via an electromagnetic and/or an optical data connection, preferably via Bluetooth and/or IR data transmission.

In particular, the remotely controllable device comprises consumer products and/or security products, preferably a television, a computer, a hi-fi equipment, an electronic lock, a garage door opener, an elevator, electric windows, electrical blinds, lights, tone or colour of lights, household appliances and the like. In particular, it is herewith possible to operate suchlike remotely controllable devices by simply using a personal mobile phone and no certain remote control devices are needed.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

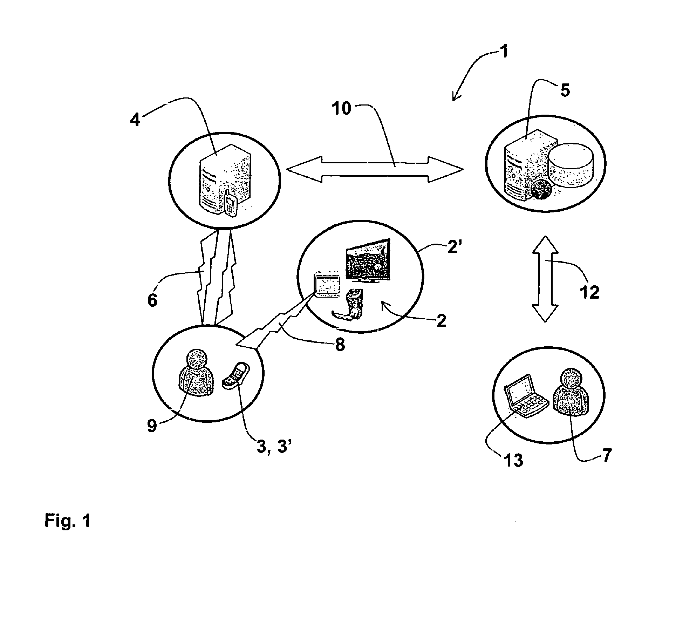

Figure 1 illustrates schematically a method and a system for providing a user equipment with access control to a remotely controllable device according to an exemplary embodiment of the present invention.

### DETAILED DESCRIPTION

The present invention will be described with respect to a particular embodiment and with reference to a certain drawing but the invention is not limited thereto but only by the claims. The drawing described is only schematic and is non-limiting. In the drawing, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.
Figure 1 schematically shows a method and a system for providing a user equipment 3 with access control to a remotely controllable device 2 and/or to a couple of remotely controllable devices 2 according to an exemplary embodiment of the present invention. The system 1 comprises the user equipment 3, the remotely controllable devices 2, a network operator 4 of a mobile radio access network 6 (an UMTS or LTE mobile radio access network, for instance), a service provider 5 and a device administrator 7. In the present example, the user equipment 3 comprises a mobile phone 3' with access to the mobile radio network 6. Furthermore, the user equipment 3 comprises a near field communication interface (8), like Bluetooth and/or IR data transmission, in order to remotely operate the remotely controllable device 2 if the user equipment 3 is provided with a corresponding access key. The remotely controllable device 2 preferably comprises consumer products and/or security products, like a television, a computer, a hi-fi equipment, an electronic lock, a garage door opener, an elevator, electric windows, electrical blinds, lights, tone or colour of lights, household appliances and/or the like. The manufacturer of the remotely controllable devices 2 provides the remotely controllable devices 2 according to a certain standard. This standard would involve the assignment of a secure fixed identifier, so that each of the remotely controllable devices 2 is provided with a unique identifier. The device administrator 7 is capable of registering, configuring and managing the remotely controllable devices 2. For this purpose, the service provider 5 comprises user interface 12, so that the device administrator 7 can communicate with the service provider 5 via computer 13 using a certain platform software, a webpage or the like. It is foreseen that the remotely controllable devices 2 can be grouped to certain clusters 14 in order to reflect products and services (e.g. a hotel room containing remote controllable doors, TVs, light shades, etc.; or a car consisting of remote controllable engine starter, audio equipment, etc.). The device administrator 7 configures the access rights and usage limits of the remotely controllable devices 2. In particular, the device administrator 7 initially registers the remotely controllably devices 2 by transmitting the identifier (such as a MAC address but independent of networking capabilities) of the remotely controllable device 2 to the service provider 5. Furthermore, a further identifier of the user equipment 3 is identified or assigned to the user equipment 3 by the device administrator 7. Afterwards, the further identifier is transmitted to the service provider 5 via the data interface 12. The service provider 5 hosts a device database and/or a user equipment database and provides the software-tools the device administrator 7 uses for registration, configuration and management at least of the remotely controllable devices 2. This platform offers various capabilities for provisioning access and usage profiles for mobile phone customers 9 of the user equipment 3. The service provider 5 is connected to the network operator 4, preferably via Internet connection 10, and possibly to other mobile remote control service providers (not shown in figure 1). The network operator 4 provides the authentication method needed to ensure security and to identify the user equipment 3 requesting access control for the remotely controllable devices 2. The customer 9 makes use of his mobile phone 3' (the user equipment 3) to control all remotely controllable devices 2 via near field communication methods 8. The user equipment 3 has the capability to display all remotely controllable devices 2 that are in range and that are allowed to being controlled by the customer 9. After successful authentication the user equipment 3 receives the control profile and the access key for the allowed remotely controllable devices 2 from the network operator 4.
In the following, the method of providing a user equipment 3 with access control to a remotely controllable device 2 will be described my means of an example: The device administrator 7 purchases remotely controllable devices 2 from certain device manufactures. The device administrator 7 registers/provisions the owned remotely controllable devices 2 using the administration software/tool of the remote control service provider 5. The device administrator 7 groups several remotely controllable devices 2 to a cluster to form a logical entity, like a hotel room with controllable TV lights shades etc. Customers 9 of the device administrator 7 (e.g. Hotel guests) book a service e.g. hotel rooms. The device administrator 7 (e.g. hotel reception) links the hotel room (e.g. which is a group of remote controllable devices 2) with the MSISDN (the further identifier) of the guests user equipment 3, preferably his mobile phone 3', using the administration software/tool provided by the remote control service provider 5. In this example the permission (also referred to as the access key) would be a temporary one. The customer 9 of the device administrator 7 (e.g. hotel guest) can then unlock the room door (as well as e.g. control the TV, lights and shades) with his mobile phone 3' by using an application on his mobile phone 3' showing the remote controllable devices 2 in range (e.g. room door) with the associated options in the usage profile. To achieve this, the user equipment 3 identifies the remote controllable devices 2 in range and sends an access request for the remotely controllable devices 2, as well as the identifiers of the remotely controllable devices 2 to the network operator 2 in order to receive the access key and the usage profile for the remote controllable devices 2. On the one hand, the authenticity of the user equipment 3 is verified via security checks towards the SIM card issued by the mobile operator 4 using mobile authentification methods (e.g. ciphering) and on the other hand the authorization of the user equipment 3 for access control to the remotely controllable device 2 is verified preferably on basis of the identifier and/or further identifier. In other words: The mobile network operator 4 verifies that the mobile phone trying to access the remote controllable devices 2 is the one configured by the device administrator 7. After being successfully authenticated and authorized the remote control service provider 5 would send the access key and usage profile for the remote controllable device 2 in an encrypted way to the mobile phone of the device user via the network operator 2. Subsequently, the user equipment 3 gets access control to the remotely controllable device 2 on the basis of the access key. Preferably, there are contractual relationships respectively between the device user 3 and the network operator 4, between the network operator 4 and the service provider 5, as well as between the service provider 5 and the device administrator 7.

## Claims

1. Method for providing a user equipment (3) with access control to a remotely controllable device (2) comprising the steps of:
- sending an access request for the remotely controllable device (2) to a network operator (4) of a mobile radio access network (6) by the user equipment (3),
- verifying the authenticity of the user equipment (3) by using a mobile authentification method and
- transmitting an access key for the remotely controllable device (2) to the user equipment (3) if the user equipment (3) is authorized,
- wherein the user equipment (3) gets access control to the remotely controllable device (2) due to the access key, and
wherein the validity of the access key is time limited and/or wherein the access key is a one time key and/or wherein the access key provides access control for a plurality of remotely controllable devices (2).

2. Method according to claim 1, wherein the access key comprises a usage profile for the remotely controllable device (2), wherein the usage profile limits the access control of the user equipment (3) to certain services of the remotely controllable device (2) and/or wherein the usage profile comprises technical data for using an interface (8) between the remotely controllable device (2) and the user equipment (3).

3. Method according to one of the preceding claims, wherein the method comprises the step of detecting remotely controllable devices (2) in range by the user equipment (3).

4. Method according to claim 3, wherein the method comprises the step of identifying the remotely controllable device (2) by the user equipment (3) and transmitting an access request to the network operator (4) comprising an identifier of the remotely controllable device (2).

5. Method according to claim 4, wherein the method comprises the step of verifying the authenticity of the remotely controllable device (2) and providing a certain access key assigned to the identifier, wherein the access key is transmitted to the user equipment (3) if the user equipment (2) is authorized for access control to the remotely controllable device (2).

6. Method according to claim 5, wherein the method comprises the initial step of initially registering the remotely controllable device (2) for access control by a user equipment (3), wherein the initial step comprises a step of transmitting the identifier to a service provider (5).

7. Method according to claim 6, wherein the method comprises the further initial step of initially enabling the user equipment (3) for access control to the remotely controllable device (2) by transmitting a further identifier of the user equipment (3) to the service provider (5).

8. Method according to one of the claims 6 or 7, wherein the initial step comprises a step of transmitting the identifier and the corresponding access key from the service provider (5) to the network operator (4) and/or wherein the further initial step comprises a step of transmitting the further identifier from the service provider (5) to the network operator (4).

9. Method according to one of the preceding claims, wherein the location of the user equipment (3) is determined prior to transmitting the access key for the remotely controllable device (2) to the user equipment (3).

10. System (1) for providing a user equipment (3) with access control to a remotely controllable device (2) comprising the user equipment (3), the remotely controllable device (2) and a network operator (4) of a mobile radio access network (6), wherein the network operator (4) is configured to receive an access request for the remotely controllable device (2) from the user equipment (3) and to verify the authenticity of the user equipment (3) by using a mobile authentification method and to transmit an access key for the remotely controllable device (2) towards the user equipment (3) if the user equipment (3) is authenticated, wherein the user equipment (3) and the remotely controllable device (2) are configured in such a manner that the user equipment (3) gets access control to the remotely controllable device (2) due to the access key, and
wherein the validity of the access key is time limited and/or wherein the access key is a one time key and/or wherein the access key provides access control for a plurality of remotely controllable devices (2).

11. System (1) according to claim 10, wherein the user equipment (3) is configured to identify the remotely controllable device (2) in range and to transmit an access request to the network operator (4) comprising an identifier of the remotely controllable device (2), wherein the network operator (4) is configured to transmit a certain access key assigned to the remotely controllable device (2) towards the user equipment (3) if the user equipment (2) is authorized for access control to the remotely controllable device (2).

12. System (1) according to claim 11, wherein the system (1) comprises a service provider (5) providing the network operator (4) with an identifier of the remotely controllable device (2) and/or with a further identifier of the user equipment (3), wherein the service provider (5) comprises a user (7) and/or data interface (12) for registering the controllable device (2) and/or the user equipment (3) to the service provider (5).

13. System (1) according to claim 10, wherein the user equipment (3) comprises a mobile phone and/or a PDA (Personal Digital Assistant) and/or a laptop respectively with access to the mobile radio network.

14. System (1) according to claim 10, wherein the user equipment (3) has access control to the remotely controllable device (2) due to the access key via an electromagnetic and/or an optical data connection, preferably via Bluetooth and/or IR data transmission.

15. System according to claim 10, wherein the remotely controllable device (2) comprises consumer products and/or security products, preferably a television, a computer, a hi-fi equipment, an electronic lock, a garage door opener, an elevator, electric windows, electrical blinds, lights, tone or colour of lights, household appliances and the like.
